# NEW EUROPEAN PATENT SPECIFICATION

(11) **EP 0 626 129 B2**
(45) Date of publication and mention of the opposition decision: **19.05.2004**
(45) Mention of the grant of the patent: 03.02.1999
(21) Application number: 94201454.9
(22) Date of filing: 24.05.1994
(51) Int. Cl.: A01J 7/00

(54) **A construction for milking animals**
Vorrichtung zum Melken von Tieren
Dispositif de traite d'animaux

(30) Priority: 28.05.1993 NL 9300917
(43) Date of publication of application: 30.11.1994
(73) Proprietor: MAASLAND N.V., 3155 PD Maasland (NL)
(72) Inventor: Kakes, Gijsbert, NL-3032 SM Rotterdam (NL)
(74) Representative: Corten, Maurice Jean F.M.

(56) References cited:
- EP-A- 0 091 892
- EP-A- 0 385 539
- US-A- 2 730 992
- US-A- 4 222 346
- Low:"Backflushing on the boil", Dairy Farmer, June 1978
- Dunsmore et al.: "Cleaning Milking Machines unsing Non-Iodophor Systems", The Australian Journal of Dairy Technology - June 1980
- Rider: "Windmill" Cluster Washer Beats Mastitis in Holland", Dairy Farmer, June 1992
- Machine Milking NIRD 1977, pages 38, 39, 66-69 and 286-317
- Bou-matic's System 2000
- 2000 V en VM Automatic Detachers from Boumatic
- System 2000 TM Dairy farm automation system
- International Standard ISO 5707 Milking machine Installations - Construction and performance, 1983
- International Standard ISO 3918 Milking machine installations - Vocabulary, 1977

## Description

The present invention relates to a construction for milking animals, according to the preamble of claim 1.

Such a construction is known from EP-A-0 385 539.

The invention has for its object to provide an alternative cleaning system as described above. According to the invention, the above-described construction for milking animals is characterized by the features of the characterizing part of claim 1.

When, after milking or after cleaning a change is made to cleaning or milking, then all the milk or rinsing fluid, respectively, must be removed from the supply line. By means of the air inlet valve incorporated preferably in that point of the supply line that is substantially most remote from the milk tank, the supply line can be emptied.

The three-way valve in the supply line end near the milk tank can be operated by a signal produced by a computer. The use of a computer for this purpose is particularly easy when this computer is already present, which is the case when, in accordance with the invention, the milking unit operates automatically and co-operates with an animal identification system, whilst the computer of the automatic milking unit and/or of the animal identification system supplies signals for controlling the milking and cleaning procedure and consequently also for the said three-way valve provided at the end of the supply line. The construction, in which the valve is switched by a computer, can advantageously be used in such an automatically operating milking, system, a milking unit then more In particular having a robot for automatically connecting the teat cups to the teats of an animal to be milked. Such a robotization in particular renders it possible to have the entire milking and cleaning procedure proceed without any action on the part at the farmer.

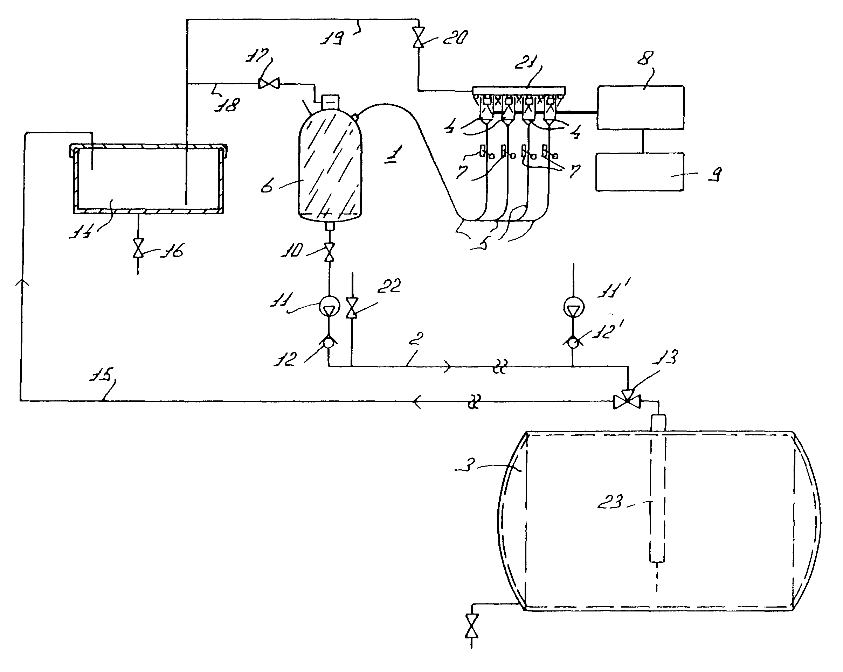

For a better understanding of the invention and to show how the same may be carried into effect, it will now be described in greater detail with reference to the accompanying drawing, which schematically shows the construction for milking animals in accordance with the invention. Before giving this description, it can be noted that it is known that each of the milking units comprises in customary manner four teat cups which can be connected to the teats of an animal to be milked and a milk meter in which the milk obtained with the aid of the teat cups is collected, whereafter the milk is pumped from the milk meter by means of a pump into said supply line and from there to the milk tank. On cleansing of the milk unit and more specifically of the supply line, a rinsing fluid is sucked wit the aid of said pump from the rinsing fluid reservoir via the milk meter. The rinsing fluid thus transferred into the supply line passes through the supply line to a point in the supply line near the milk tank, while the rinsing fluid from this point, after the connection of the supply line to the milk tank has been uncoupled, is collected or discharged to the sewer.

The Figure shows a milking unit 1, connected to a supply line 2 which leads to a milk tank 3. The milking unit 1 comprises four teat cups 4 which are to be connected to the teats of an animal to be milked, of which teat cups 4 the milk tubes 5 are passed to a milk meter 6 which is constituted by a collecting glass. The milk tubes 5 are provided with shut-off devices 7, which are each used to close a milk tube by pinching, or in a different manner, as soon as the vacuum in a corresponding teat cup has fallen out. The teat cups 4 can be connected to the teats of an animal to be milked with the aid of a robot 8, in which case this robot 8 includes a robot arm which serves as a carrier for the teat cups 4. In this situation, the milking robot 8 is controlled from a computer 9. From the collecting glass 6 the milk obtained is fed back to the supply line 2. For that purpose the flow-out aperture of the collecting glass 6 is connected to a pump 11 via a valve 10. Using the pump 11, the milk is pumped into the supply line 2 the non-return valve 12. A plurality of milking units can of course be connected to the supply line 2; the Figure shows the pump 11' and the non-return valve 12', through which units milk can be passed from the collecting glass of a second milking unit into the supply line 2.

At the end of the supply line 2, near the milk tank 3, this line 2 is provided with a three-way valve 13, to which is connected a rinsing fluid discharge line 15 which is fed back to a rinsing fluid reservoir 14. The rinsing fluid reservoir 14 can be connected to the sewer via a valve 16. When the valve 13 is adjusted to a first position, milk obtained with the aid of the milking unit 1 can be passed into the milk tank 3, whilst, when the valve 13 is adjusted to a second position, a rinsing fluid ring line system is established. This rinsing fluid ring line system then incorporates the rinsing fluid reservoir 14, a line 18 which leads from the rinsing fluid reservoir to the collecting glass 6 and is provided with a valve 17, the collecting glass 6 itself, the valve 10 connected to the flow-out aperture of the collecting glass 6, the pump 11, the non-return valve 12, the supply line 2, the three-way valve 13, and the rinsing fluid discharge line 15. Using the pump 11, the rinsing fluid can be transferred from the rinsing fluid reservoir 14 and be circulated through the said ring line system, in this manner a portion of the milking unit, i.e. the collecting glass 6 and the units connected thereto, as well as the supply line 2, can be cleaned. However, in order to enable also the teat cups 4 to be cleaned, a by-pass line is provided which leads from the rinsing fluid reservoir 14 via a line 19 which contains a valve 20, to a cassette 21 with spray nozzles for cleaning the interior side of the teat cups 4, from there via the teat cups 4 connected to this cassette 21 and the milk tubes 5 to the collecting glass 6. The rinsing fluid sucked-up by the pump 11 is not only passed directly to the collecting glass 6 via the valve 17, but also to the collecting glass 6 via the valve 20, the cassette 21, the teat cups 4 and the milk tubes 5. Consequently, each milking unit can be deaned separately, together with the discharge line 2, with the aid of the pump 11. An air inlet valve 22 is incorporated in the supply line 2 near the point in which that milking unit 1 that is most remote from the milk tank 3 is connected to the supply line. Using this valve 22, air can be blown through substantially the entire supply line 2, in order to remove all the milk after the milking operation and all the rinsing fluid after the supply line 2 has been cleaned. The milk tank 3, which in the embodiment shown is fitted with a filter 23 in the milk supply line, can be cleaned independently of the milking unit 1 and the supply line 2. The cleaning system for the milk tank 3 is not further shown in the drawing.

The construction described here may constitute part of a fully automated milking and cleaning system, in which use can be made of an automatic system for allowing the animals, optionally selectively, to enter the milking parlour, an animal identification system, a teat cleaning system, a robot (the robot 8) for the automatic connection of the teat cups, an automatically proceeding milking procedure with built-in checks on the quality of the milk and the development of the procedure, an automatic feeding system, etc. The entire system is then under the control of a computer (the computer 9); this computer is then of course utilized to control the elements of the construction described in detail here, more specifically the pump 11 and the three-way valve 13.

The invention is not limited to the embodiment described in the foregoing and shown in the Figure, but embraces all types of modifications, of course falling within the scope of the accompanying claims.

## Claims

1. A construction for milking animals, comprising one or more milking units (1) connected to a supply line (2) leading to a milk tank (3), as well as a rinsing fluid reservoir (14) from which a rinsing fluid can be passed through at least a portion of a milking unit (1) and the supply line (2), while a three-way valve (13) is incorporated in the end portion of the supply line (2) near the milk tank (3), and a rinsing fluid discharge line (15) connected to said valve (13) can return the rinsing fluid to the rinsing fluid reservoir (14) said three-way valve (13) being adjustable into a first position wherein milk obtained by means of a milking unit (1) can be transferred to the milk tank (3) and into a second position wherein a rinsing fluid ring line system is established **characterized in that** the rinsing fluid ring line system is formed by the rinsing fluid reservoir (14), a line (18) which extends from the reservoir (14) and is provided with a valve (17) and which leads to the upper end of a milk meter (6) constituted by a collecting glass, the milk meter (6) itself, the line section in which a pump (11) is incorporated and the supply (2) and rinsing fluid discharge (15) line and **in that** there is incorporated in the supply line (2) an air inlet valve (22) for the purpose of removing milk or rinsing fluid therefrom.

2. A construction as claimed in claim 1, **characterized in that** the air inlet valve (22) is incorporated in the supply line (2) near that point of connection of the milking unit (1) to the supply line (2) that is most remote from the milk tank (3).

3. A construction as claimed in claim 1 or 2, **characterized in that** a milking unit (1) includes teat cups (4) which can be connected to the teats of an animal to be milked, and the milk meter (6), via which the milk obtained with the aid of the teat cups (14) is fed into the supply line (2).

4. A construction as claimed in claim 1, **characterized in that** the rinsing fluid ring line system between the rinsing fluid reservoir (14) and the milk meter (16) includes a by-pass line (19) which is equipped, arranged one after the other, with a valve (20), a cassette (21) with spraying means for cleaning the interior side of the teat cups (4), and the teat cups (4) themselves.

5. A construction as claimed in claim 3 or 4, **characterized in that** by means of the pump (11) during milking milk is transferred from the milk meter (6) to the milk tank (3), and during cleaning of the milk unit a rinsing fluid is circulated through the rinsing fluid ring line system.

6. A construction as claimed in any one of the preceding claims, **characterized in that** the valves (13, 17, 20, 22) are controlled by a computer (9).

7. A construction as claimed in any one of the preceding claims, **characterized in that** a milking unit (1) includes a robot for automatically connecting the teat cups (4) to the teats of an animal to be milked.

8. A construction as claimed in any one of the preceding claims, **characterized in that** a milking unit (1) operates automatically and co-operates with an animal identification system, whilst the computer (9) of the automatic milking unit and/or of the animal identification system supplies signals for controlling the milking and cleaning procedure, more specifically the said pump (11) and valves (13, 17, 20, 22) incorporated in the lines.

## Patentansprüche

1. Vorrichtung zum Melken von Tieren mit einer oder mehreren Melkeinheiten (1), die an eine zu einem Milchtank (3) führende Zuführleitung (2) angeschlossen sind, sowie mit einem Spülflüssigkeitsbehälter (14), aus dem eine Spülflüssigkeit zumindest durch einen Teil einer Melkeinheit (1) und durch die Zuführleitung (2) zu leiten ist, wobei im Endabschnitt der Zuführleitung (2) nahe dem Milchtank (3) ein Dreiwegeventil (13) angeordnet ist, und wobei die Spülflüssigkeit durch eine mit dem Ventil (13) verbundene Spülflüssigkeits-Abflußleitung (15) zum Spülflüssigkeitsbehälter (14) zurückzuleiten ist, wobei das Dreiwegeventil (13) in eine erste Position einstellbar ist, in der mittels einer Melkeinheit (1) gewonnene Milch zum Milchtank (3) zu leiten ist, und in eine zweite Position, in der ein Spülflüssigkeits-Ringleitungssystem gebildet ist,
**dadurch gekennzeichnet, daß** das Spülflüssigkeits-Ringleitungssystem gebildet ist durch den Spülflüssigkeitsbehälter (14), eine von dem Behälter (14) ausgehende Leitung (18), die ein Ventil (17) aufweist und an das obere Ende eines durch ein Sammelglas gebildeten Milchmengenmessers (6) geführt ist, den Milchmengenmesser (6) selbst, den eine Pumpe (11) enthaltenden Leitungsabschnitt und die Zuführleitung (2) sowie die Spülflüssigkeits-Abflußleitung (15), und daß in der Zuführleitung (2) ein Lufteinlaßventil (22) angeordnet ist, um Milch oder Spülflüssigkeit aus der Leitung zu entfernen.

2. Vorrichtung nach Anspruch 1,
**dadurch gekennzeichnet, daß** das Lufteinlaßventil (22) in der Zuführleitung (2) nahe derjenigen Anschlußstelle der Melkeinheit (1) an die Zuführleitung (2) angeordnet ist, die am weitesten vom Milchtank (3) entfernt ist.

3. Vorrichtung nach Anspruch 1 oder 2,
**dadurch gekennzeichnet, daß** eine Melkeinheit (1) Zitzenbecher (4) aufweist, die an die Zitzen eines zu melkenden Tieres anschließbar sind, sowie den Milchmengenmesser (6), über den die mit Hilfe der Zitzenbecher (4) gewonnene Milch in die Zuführleitung (2) geleitet wird.

4. Vorrichtung nach Anspruch 1,
**dadurch gekennzeichnet, daß** das Spülflüssigkeits-Ringleitungssystem zwischen dem Spülflüssigkeitsbehälter (14) und dem Milchmengenmesser (6) eine Bypassleitung (19) aufweist, in der hintereinander ein Ventil (20), ein Gehäuse (21) mit einer Sprühvorrichtung zum Reinigen der Innenseite der Zitzenbecher (4) und die Zitzenbecher (4) selbst angeordnet sind.

5. Vorrichtung nach Anspruch 3 oder 4,
**dadurch gekennzeichnet, daß** mittels der Pumpe (11) während des Melkens Milch vom Milchmengenmesser (6) zum Milchtank (3) und während des Reinigens der Melkeinheit eine Spülflüssigkeit durch das Spülflüssigkeits-Ringleitungssystem geleitet wird.

6. Vorrichtung nach einem der vorhergehenden Ansprüche, **dadurch gekennzeichnet, daß** die Ventile (13, 17, 20, 22) von einem Computer (9) gesteuert sind.

7. Vorrichtung nach einem der vorhergehenden Ansprüche, **dadurch gekennzeichnet, daß** eine Melkeinheit (1) einen Roboter zum automatischen Anschließen der Zitzenbecher (4) an die Zitzen eines zu melkenden Tieres aufweist.

8. Vorrichtung nach einem der vorhergehenden Ansprüche, **dadurch gekennzeichnet, daß** eine Melkeinheit (1) automatisch arbeitet und mit einem Tieridentifizierungssystem zusammenwirkt, wobei der Computer (9) der automatischen Melkeinheit und/oder des Tieridentifizierungssystems Signale zum Steuern des Melk- und des Reinigungsvorganges gibt, insbesondere zum Steuern der Pumpe (11) und der Ventile (13, 17, 20, 22), die in den Leitungen angeordnet sind.

## Revendications

1. Dispositif de traite d'animaux, comprenant une ou plusieurs unités de traite (1) reliées à une conduite d'alimentation (2) allant à un réservoir de lait (3) ainsi qu'un réservoir de fluide de rinçage (14) à partir duquel on peut faire passer un fluide de rinçage dans au moins une partie d'une unité de traite (1) et dans la conduite d'alimentation (2), tandis qu'une vanne à trois voies (13) est incorporée dans la partie terminale de la conduite d'alimentation (2) près du réservoir de lait (3), et une conduite de décharge (15) en fluide de rinçage, reliée à ladite vanne (13), peut renvoyer le fluide de rinçage au réservoir de fluide de rinçage (14), ladite vanne à trois voies (13) étant réglable sur une première position dans laquelle le lait obtenu au moyen d'une unité de traite (1) peut être transféré vers le réservoir de lait (3), et sur une deuxième position dans laquelle un système de conduite annulaire de fluide de rinçage est établi, **caractérisé en ce que** le système de conduite annulaire de fluide de rinçage est formé par le réservoir de fluide de rinçage (14), une conduite (18) qui s'étend à partir du réservoir (14), qui est munie d'une vanne (17) et qui va à l'extrémité supérieure d'un compteur de lait (6) constitué par un verre collecteur, le compteur de lait (6) lui-même, la section de conduite dans laquelle est incorporée une pompe (11), la conduite d'alimentation (2), et la conduite de décharge (15) du fluide de rinçage, et **en ce que**, dans la conduite d'alimentation (2), est incorporée une vanne d'admission d'air (22) dans le but d'en enlever le lait ou le fluide de rinçage.

2. Dispositif selon la revendication 1, **caractérisé en ce que** la vanne d'admission d'air (22) est incorporée dans la conduite d'alimentation (2) près du point de jonction de l'unité de traite (1) avec la conduite d'alimentation (2) qui est le plus éloigné du réservoir de lait (3).

3. Dispositif selon la revendication 1 ou 2, **caractérisé en ce qu'**une unité de traite (1) comporte des godets de trayons (4) qui peuvent être reliés aux trayons d'un animal à traire, et le compteur de lait (6) par l'intermédiaire duquel le lait obtenu à l'aide des godets de trayons (4) est envoyé dans la conduite d'alimentation (2).

4. Dispositif selon la revendication 1, **caractérisé en ce que** le système de conduite annulaire de fluide de rinçage entre le réservoir de fluide de rinçage (14) et le compteur de lait (6) comporte une conduite de dérivation (19) qui est équipée, disposés l'un après l'autre, d'une vanne (20), d'une cassette (21) avec des moyens pulvérisateurs pour nettoyer l'intérieur des godets de trayons (4), et les godets de trayons (4) eux-mêmes.

5. Dispositif selon la revendication 3 ou 4, **caractérisé en ce que**, au moyen de la pompe (11) pendant la traite, le lait est transféré à partir du compteur de lait (6) vers le réservoir de lait (3), et pendant le nettoyage de l'unité de traite un fluide de rinçage est mis en circulation dans tout le système de conduite annulaire de fluide de rinçage.

6. Dispositif selon l'une quelconque des revendications précédentes, **caractérisé en ce que** les vannes (13, 17 20, 22) sont commandées par un ordinateur (9).

7. Dispositif selon l'une quelconque des revendications précédentes, **caractérisé en ce qu'**une unité de traite (1) comporte un robot pour relier automatiquement les godets de trayons (4) aux trayons d'un animal à traire.

8. Dispositif selon l'une quelconque des revendications précédentes, **caractérisé en ce qu'**une unité de traite (1) fonctionne automatiquement et coopère avec un système d'identification des animaux, tandis que l'ordinateur (9) de l'unité de traite automatique et/ou du système d'identification des animaux fournit des signaux pour commander la procédure de traite et de nettoyage, plus spécifiquement ladite pompe (11) et lesdites vannes (13, 17, 20, 22) incorporées dans les conduites.
